(19) Europäisches Patentamt
European Patent Office
Office européen des brevets

(11) EP 0 707 224 A1

(12) DEMANDE DE BREVET EUROPEEN

(43) Date de publication:
**17.04.1996 Bulletin 1996/16**

(51) Int Cl.[6]: **G02B 6/293**, G02B 6/12

(21) Numéro de dépôt: **95402261.2**

(22) Date de dépôt: **09.10.1995**

(84) Etats contractants désignés:
**AT BE CH DE ES GB IT LI NL SE**

(30) Priorité: **11.10.1994 FR 9412112**

(71) Demandeur: **ALCATEL N.V.**
**NL-2288 BH Rijswijk (NL)**

(72) Inventeurs:
- **Sansonetti, Pierre**
  **F-91120 Palaiseau (FR)**
- **Riant, Isabelle**
  **F-91120 Palaiseau (FR)**

(74) Mandataire: **Pothet, Jean Rémy Emile Ludovic**
**c/o SOSPI**
**14-16 rue de la Baume**
**F-75008 Paris (FR)**

(54) **Coupleur optique sélectif en longueur d'onde**

(57) Coupleur optique sélectif en longueur d'onde comprenant un coupleur optique (C) entre deux structures guidantes, ledit coupleur (C) comportant une région de couplage entre lesdites structures, ledit coupleur sélectif comprenant en outre un réseau de Bragg (B) réalisé au milieu de ladite région de couplage. Selon une réalisation préférée, ledit coupleur optique (C) est un coupleur 100%. Selon différentes variantes, le coupleur (C) est réalisé en fibres optiques ou utilisant les techniques de l'optoélectronique intégrée sur substrat semiconducteur, verre ou silice ; le réseau de Bragg (B) est un réseau à pas constant, à pas multiple, ou à pas variable. Application aux systèmes de transmission optique d'informations multiplexées en longueur d'onde.

FIG.2

Σλ
1
C
3
B
λB
Σλ-λB
2
4

EP 0 707 224 A1

**Description**

L'invention concerne le domaine des coupleurs optiques qui permettent le transfert d'énergie lumineuse entre deux guides optiques. Dans un coupleur optique, un mode de propagation dans un premier guide optique est couplé à un mode de propagation dans un deuxième guide optique. Aussi l'injection de la lumière dans le premier guide peut exciter un mode de propagation dans le deuxième guide, selon les conditions de couplage propre au coupleur optique.

Plus précisément, l'invention concerne un coupleur optique sélectif en longueur d'onde, c'est-à-dire dont les conditions de couplage sont fonction de la longueur d'onde de la lumière qui se propage dans les guides respectifs.

On connaît classiquement, par exemple, le coupleur 3dB pour fibres optiques. L'Homme de l'art sait qu'un tel coupleur peut être réalisé par polissage, ou fusion et tirage de deux fibres optiques dans la région de couplage, ce qui permet de rapprocher les deux coeurs des fibres suffisamment pour permettre le couplage électromagnétique entre les modes respectifs de propagation dans chaque fibre. Les paramètres géométriques du coupleur, telles que la longueur de la région de couplage et la distance entre les coeurs de fibres sont choisis par le concepteur afin d'obtenir le coefficient de couplage voulu, par exemple 50% dans le cas d'un coupleur 3dB. Dans cet exemple, 50 % de la lumière injectée dans la première fibre sera transférée et se propagera dans la deuxième fibre, tandis que les 50% restant continueront à se propager dans la première fibre.

D'une manière similaire des coupleurs optiques peuvent être réalisés entre des guides optiques utilisant les techniques de l'optique intégrée. Les guides à coupler sont rapprochés dans la région de couplage, dont la longueur et la séparation entre les guides déterminent le coefficient de couplage.

L'homme de l'art sait aussi réaliser des coupleurs optiques de faible couplage, par exemple de 1 à 5% qui sont utilisés pour prélever un signal de contrôle de l'onde qui se propage dans une fibre ou dans un guide optique ; ou de 50 % pour diviser un signal optique sur deux guides ou fibres. Il est également possible de réaliser un coupleur 100%, c'est-à-dire que 100% de la lumière se propageant dans la première fibre sera transférée dans la deuxième fibre en traversant la région de couplage.

Il est connu également la réalisation d'un miroir sélectif en longueur d'onde par la création d'un réseau de Bragg à l'intérieur même d'une fibre ou d'un guide optique. Selon un procédé connu, des variations périodiques d'indice de réfraction sont créées sur une certaine longueur d'un guide ou d'une fibre. Ceci peut être effectué par exemple par l'introduction de défauts dans la fibre ou dans le guide à l'aide d'un dopage de Germanium qui le rend sensible à la lumière ultraviolette (UV) ; suivi de "l'inscription" (l'écriture ou l'impression) du réseau à l'aide d'un faisceau fin de lumière UV.

L'exposition d'une fibre ou d'un guide dopé à la lumière UV introduit un changement local de l'indice de réfraction. A chaque changement d'indice, un faible pourcentage de la lumière se propageant dans le guide ou la fibre sera réfléchie pour se propager en sens inverse.

Un réseau de Bragg est créé par l'inscription des variations périodiques d'indice à pas constant, à pas variable ou à pas multiple. Dans le cas le plus simple d'un pas constant, le miroir est réfléchissant pour une longueur d'onde dans la fibre ou le guide, égale à deux fois le pas de réseau multiplié par l'indice effectif, la seule longueur d'onde pour laquelle il existe une interférence constructive des ondes réfléchies à toutes les interfaces de changement d'indice.

Dans des réalisations courantes de réseaux de Bragg sur fibre optique, le miroir Bragg est réfléchissant pour une longueur d'onde $\lambda B$ ayant une largeur de raie de l'ordre de 0,5nm, pour $\lambda B$ dans l'infrarouge et un réseau à pas constant.

Des réalisations plus pointues peuvent descendre jusqu'à une largeur de raie de l'ordre de 0,1nm, ou monter jusqu'à 1nm de largeur de raie.

L'utilisation d'un pas variable peut permettre d'atteindre jusqu'à 10nm de largeur de raie de la lumière réfléchie par le réseau de Bragg. Toutes les autres longueurs d'onde, en dehors de la largeur de raie autour de $\lambda B$ qui sera réfléchie par le réseau de Bragg, sont transmises pratiquement sans pertes et sans réflexions.

Pour des systèmes de transmission d'informations par propagation de signaux lumineux sur fibres optiques utilisant le multiplexage en longueur d'onde, plusieurs canaux (k1, k2, ...) définis par une longueur d'onde centrale ($\lambda 1$, $\lambda 2$ ...) et une largeur de raie à autour de chaque longueur d'onde ($\lambda 1$, $\lambda 2$, ...)peuvent être véhiculés simultanément sur une même fibre. Il se pose alors le problème d'insertion et d'extraction d'un signal se propageant dans un canal ka sur une longueur d'onde $\lambda a$ ayant une largeur $\delta$ sans perturbation des informations qui circulent dans les autres canaux sur la même fibre. Pour se faire, la solution élégante serait un coupleur optique sélectif en longueur d'onde.

Un tel coupleur peut être réalisé par l'inscription de deux réseaux de Bragg équivalents chacun dans l'un des bras d'un interféromètre de Mach-Zendher, qui agit comme un interféromètre de Michelson pour la bande spectrale réfléchie par le réseau de Bragg, et comme un interferomètre Mach-Zendher en dehors de cette bande spectrale.

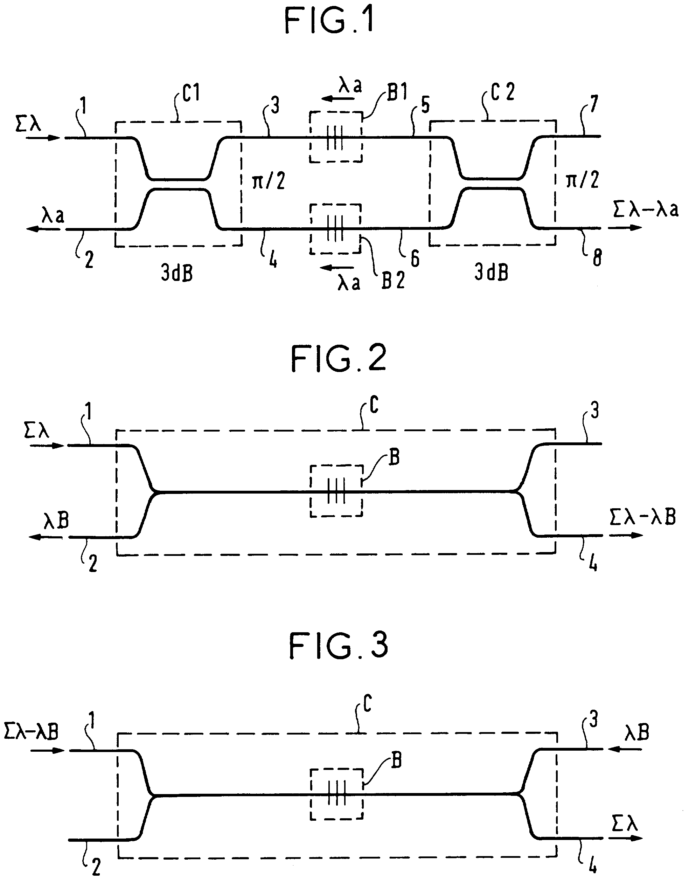

Un tel coupleur optique sélectif en longueur d'onde peut être réalisé en utilisant des composants connus tels que décrits ci-dessus, agencés comme montré sur la figure 1. Le coupleur montré sur la figure 1 comprend deux coupleurs optiques 3dB C1, C2 et deux réseaux de Bragg B1, B2 réfléchissants pour une longueur d'onde $\lambda a$ et transparents pour toutes les autres longueurs d'onde du spectre

$$\sum_{i=1}^{n} \lambda i$$

véhiculé dans la fibre ou dans le guide optique.

La lumière multiplexée en longueur d'onde

$$\sum_{i} \lambda i$$

est injectée sur le premier accès 1 d'un premier coupleur 3dB C1 qui la divise en deux pour l'envoyer sur les deux accès de sortie 3,4 avec un premier déphasage de $\Delta\phi = \pi/2$ entre les deux sorties 3, 4 mais avec des amplitudes égales. Ces deux sorties 3, 4 sont chacune raccordées à un réseau de Bragg B1, B2 respectivement, pour réfléchir la lumière d'une lonaueur d'onde spécifique λa, tout en laissant passer toute les autres longueurs d'onde du spectre

$$(\sum_{i} \lambda_i - \lambda_a) .$$

Les ondes λa réfléchies par les deux réseaux de Bragg B1, B2 sont alors renvoyées vers le premier coupleur C1 par les mêmes accès 3, 4, et elles sont additionnées avec un deuxième déphasage de $\Delta\phi_2 = \pi/2$. Si les longueurs optiques des deux chemins parcourus sont identiques, l'addition des deux ondes est en phase sur l'accès 2 et la totalité de la puissance injectée à la longueur d'onde λa sur l'accès 1 se retrouvera à la sortie sur l'accès 2 où le déphasage total $\Delta\phi_{T2} = \Delta\phi_1 - \Delta\phi_2 = 0$. Il n'y a alors aucune puissance réfléchie à $\lambda_a$ sur l'accès 1, car le déphasage total $\Delta\phi_{T1} = \Delta\phi_1 + \Delta\phi_2 = \pi$, c'est-à-dire l'interférence destructive totale.

Quant à la lumière transmise par les réseaux de Bragg B1, B2, à savoir toute longueur d'onde autre que λa, elle est acheminée vers deux accès 5, 6 respectivement d'un deuxième coupleur 3dB C2.

De la même manière que pour la lumière réfléchie λa, la lumière transmise

$$(\sum_{i} \lambda_i - \lambda_a)$$

injectée sur les deux accès 5, 6 du deuxième coupleur 3dB C2 est additionné en phase pour l'accès de sortie 8 et en opposition de phase pour l'autre accès de sortie 7, à condition que les longueurs optiques des deux chemins parcourus soient identiques. Il en résulte alors que toute la puissance injectée sur le premier accès 1 du premier coupleur 3dB C1 se trouve sur l'accès de sortie 8 du deuxième coupleur 3dB C2 pour toute longueur d'onde transmise par les réseaux de Bragg B1, B2, tandis qu'aucune puissance ne doit se trouver sur le premier accès de sortie 7 du deuxième coupleur C2.

Cette solution réalisable avec des composants optiques connus présente de nombreux inconvénients.

Les longueurs des chemins optiques doivent être accordées avec une précision bien meilleure que λ/10, difficilement réalisable par des moyens mécaniques uniquement (λ≅ 1,3 à 1,55µm demande une précision meilleure que ou de l'ordre de 100nm). Donc pour accorder les longueurs des chemins optiques, on agit localement sur l'indice de réfraction sur une partie de la fibre ou du guide, par exemple par l'exposition à la lumière UV, tout en observant l'interférence constructive et destructive en temps réel sur banc de mesure.

Un tel procédé de réalisation et de réglages est mal adapté aux exigences d'une fabrication industrielle.

D'autre part, même dans le cas improbable d'une réalisation parfaite, les longueurs optiques présentent des variations en fonction de la température qui peuvent dérégler ce genre de coupleur optique sélectif en longueur d'onde.

Si les longueurs optiques sont mal réglées ou déréglées par effet de température, la cohérence de la lumière dans les deux bras n'est plus assurée, ce qui entraîne d'une part des pertes d'intensité sur l'accès de sortie, et d'autre part une réflexion d'une partie de la puissance vers la source par l'accès d'injection 1, ce qui peut perturber la source.

Finalement, dans le meilleur des cas, des pertes plus importantes sont introduites par l'utilisation des coupleurs 3dB en cascade, qui sont nécessaire dans une telle réalisation. Il s'agit d'un inconvénient majeur pour des systèmes à multiplexage en longueur d'onde, où le nombre de coupleurs sélectif en longueur d'onde est en proportion du nombre de canaux multiplexés.

L'invention a pour but de pallier les inconvénients de l'art antérieur. A ces fins, l'invention propose un coupleur optique sélectif en longueur d'onde, comprenant des moyens de couplage C pour l'extraction ou l'insertion de l'énergie optique, à partir d'une ou vers une structure guidante, ces moyens C aptes à effectuer un couplage optique uniquement à une longueur d'onde donnée λB à l'exclusion de toute autre longueur d'onde, lesdits moyens de couplage comprenant un coupleur optique ayant une région de couplage, et un réseau de Bragg B apte à réfléchir ladite longueur d'onde λB, afin de permettre l'extraction ou l'insertion de ladite énergie optique à ladite longueur d'onde λB ; caractérisé en ce que ledit réseau de Bragg B est réalisé au milieu de ladite région de couplage dudit coupleur optique C sans apport de matériau

Dans une réalisation préférée, ledit coupleur optique C est un coupleur 100%. Selon une caractéristique, le coupleur est réalisé à partir de fibres optiques. Selon une autre caractéristique, le coupleur est réalisé par les techniques de l'optique intégrée. Selon une caractéristique, ledit réseau de Bragg B est un réseau à pas constant. Selon une autre caractéristique, ledit réseau de Bragg B est un réseau à pas variable. Selon une variante, ledit réseau de Bragg est un réseau à pas multiple, réfléchissant pour au moins deux longueurs d'ondes différentes.

D'autres caractéristiques et avantages de l'invention ressortiront de la description détaillée qui suit de quelques exemples de réalisations, avec ses dessins annexés, dont :

- la figure 1, déjà décrite, montre une réalisation selon l'art antérieur d'un coupleur optique sélectif en longueur d'onde pour l'extraction d'une longueur d'onde λa,
- la figure 2 montre schématiquement un exemple d'un coupleur optique sélectif en longueur d'onde selon l'invention, configuré pour l'extraction d'une longueur d'onde λB,
- la figure 3 montre schématiquement le coupleur de la figure 2, configuré pour l'insertion d'une longueur d'onde λB .

Sur tous les dessins qui représentent des exemples non limitatifs des réalisations selon l'invention, les mêmes repères se réfèrent aux mêmes éléments.

La figure 2 montre schématiquement un exemple d'une réalisation selon l'invention d'un coupleur optique sélectif en longueur d'onde, en son mode de fonctionnement en extraction de la longueur d'onde λB. Le coupleur selon l'invention comprend un coupleur optique classique C ayant un réseau de Bragg B au milieu de sa région de couplage. Un coupleur optique classique a ses quatre accès 1, 2, 3, 4 dont le premier 1 qui sert d'accès d'entrée dans le présent exemple.

Dans une réalisation préférée de l'invention, le coupleur optique C est un coupleur 100%, tel que montré sur la figure 2. L'homme de l'art sait que le couplage a 100 % est obtenu en accordant la longueur de la région de couplage **l** du coupleur : si une longueur **l** donne un couplage 100 %, une longueur **l/2** donne un coupleur 3 dB et une longueur **2l** donne un couplage de 0 %, c'est à dire que toute la lumière se trouve sur la sortie 3.

En l'absence du réseau de Bragg B, toute la lumière injectée

$$\sum_i \lambda_i$$

sur l'accès d'entrée 1 se retrouverait sur l'accès de sortie 4 grâce au couplage à 100%. Mais le réseau de Bragg B, disposé au milieu du coupleur C, est réfléchissant pour la longueur d'onde λB, qui ne sera donc pas transmise vers l'accès de sortie 4 mais réfléchie vers l'accès 2. Puisque le réseau B est au milieu du coupleur C, la longueur du chemin optique parcouru par la lumière reflechie λB vers l'accès de sortie 2 est égale à la longueur du chemin optique parcouru par la lumière transmise vers l'accès de sortie 4, 100 % de la lumière reflechie à la longueur d'onde λB se trouve dirigée vers l'accès de sortie 2 . Mise à part cette longueur d'onde λB, toute la lumière restante

$$(\sum_i \lambda_i - \lambda_B)$$

sera couplée à 100% et transmise vers l'accès de sortie 4. Le coupleur sélectif en longueur d'onde permet ainsi d'effectuer l'extraction d'une longueur d'onde λB d'un spectre

$$\sum_i \lambda_i ,$$

sans perturbation des autres longueurs d'onde

$$(\sum_i \lambda_i - \lambda_B) ,$$

et ce théoriquement sans pertes. Les pertes réelles seront de l'ordre de 0,1 dB par coupleur.

Pour réaliser un coupleur optique sélectif en longueur d'onde selon l'invention, il sera fait appel aux mêmes techniques décrites ci-dessus pour la réalisation de composants classiques qui sont les coupleurs optiques et les réseaux de Bragg.

Par exemple, on réalise d'abord un coupleur optique, utilisant la technique connue de polissage ou de fusion et tirage de deux fibres optiques afin de créer une région de couplage entre les deux coeurs des fibres. Le coupleur ainsi réalisé aura les quatre accès (1, 2, 3, 4) montrés sur la figure 2. De tels coupleurs sont réalisés couramment à l'échelle industrielle, avec des fibres optiques de diamètres standard (8 à 9 µm).

De préférence, le coupleur de l'invention sera lui aussi réalisé avec des fibres de diamètre standard. Mais des fibres standard ont un faible taux de Germanium (Ge), ce qui les rend peu sensible à la lumière UV et donc rend difficile l'inscription du réseau de Bragg. Ce problème peut être surmonté en le rendant sensible à la lumière UV d'une autre manière, par exemple en augmentant le taux d'hydrogène à l'intérieur de la fibre. Pour ce faire, le coupleur peut être placé sous atmosphère hydrogène à forte pression (100 bars à 300 bars) pour quelques dizaines de jours. L'hydrogène sera ainsi absorbé en quantité suffisante pour rendre les fibres sensibles à l'UV et pour permettre l'inscription du réseau de Bragg dans la région de couplage.

Une autre solution serait d'utiliser, pour la réalisation du coupleur, des fibres de coeur plus fin (de l'ordre de 1,4µm par exemple) qui ont des concentrations plus fortes de Ge et qui sont de ce fait déjà sensibles à la lumière UV.

Un inconvénient de cette solution est que la réalisation du coupleur est rendue délicate par le faible diamètre de coeur de ces fibres.

Néanmoins, il est attendu que des avancées technologiques rendent cette solution aussi viable que la première décrite ci-dessus, dans un avenir proche.

Suite à la réalisation du coupleur par techniques connues et sa sensibilisation à la lumière UV éventuelle si besoin est, il suffit d'appliquer les techniques classiques d'inscription d'un réseau de Bragg B à l'intérieur même de la région de couplage.

La géométrie du réseau sera déterminée en fonction des paramètres du système de multiplexage en longueur d'onde auquel le coupleur sélectif est destiné : largeur des canaux, séparations des canaux, éventuellement de nombre de canaux à faire transiter par une seule opération d'insertion ou d'extraction.

Pour des systèmes à multiplexage à longueur d'ondes envisagés actuellement un réseau de Bragg à pas constant serait utilisé pour réfléchir une longueur d'onde λB ayant une largeur de raie de l'ordre de 0,1 nm à 0,5nm pour des canaux de multiplexage espacés de 1nm à 4nm entre canaux. Un réseau de Bragg à pas variable serait utilisé pour obtenir de largeurs de raie de l'ordre d'un ou quelques nanomètres, soit pour des canaux plus larges à très hauts débits, soit pour extraire une pluralité de canaux adjacents simultanément avec un seul coupleur.

Il est également envisageable d'inscrire un réseau de Bragg à pas multiple, réfléchissant pour deux ou plusieurs longueurs d'onde différentes. Un tel réseau de Bragg à pas multiple est capable d'extraire simultanément deux ou plusieurs canaux adjacents ou non.

Un réseau possédant deux pas peut également s'avérer intéressant pour le bon fonctionnement du dispositif même à une seule longueur d'onde, pour réfléchir les modes symétrique et antisymétrique du coupleur à une longueur d'onde unique.

Après l'inscription du réseau de Bragg B, il ne reste que des détails de finition d'un produit commercialisable, tels l'adjonction d'une gaine protectrice opaque, l'adjonction éventuel des connecteurs optiques sur les accès, la terminaison d'un accès inutilisé éventuel,...

Aussi peut-on réaliser un coupleur optique sélectif en longueur d'onde par des technologies connues, tout en évitant des réglages délicats et difficiles, ce coupleur ayant une faible sensibilité aux variations de la température ambiante ainsi que des pertes quasi nulles.

La figure 3 montre schématiquement l'utilisation du même coupleur que dans la figure 2, pour l'insertion d'un signal optique d'une longueur d'onde λB au sein d'un signal multiplexé en longueur d'onde dépourvu du canal λB

$$\left(\sum_i \lambda_i - \lambda_B\right).$$

Le spectre

$$\left(\sum_i \lambda_i - \lambda_B\right)$$

est injecté sur l'accès d'entrée 1 comme dans le cas précédent et, comme il n'y a pas de lumière ayant la longueur d'onde λB, toute la lumière est intégralement transmise par le coupleur optique à 100 % C vers l'accès de sortie 4 sans réflexion par le réseau de Bragg B.

Le signal λB à insérer est injecté sur l'autre accès d'entrée 3, et réfléchi par le réseau de Bragg B pour se retrouver sur l'accès de sortie 4 avec les autres longueurs d'onde multiplexées. L'insertion de λB avec le spectre injecté sur l'accès 1

$$\left(\sum_i \lambda_i - \lambda_B\right)$$

donne le spectre entier

$$\sum_i \lambda_i$$

sur l'accès de sortie 4.

Contrairement au coupleur sélectif de l'art connu décrit ci-dessus à l'aide de la figure 1, le coupleur de l'invention se prête à une fabrication industrielle par la simplicité des techniques employées et par l'absence de réglages fastidieux. Son utilisation au sein d'un système en multi longueurs d'onde sera facilitée par ses performances spectrales et par ses très faibles pertes, ainsi que par l'absence de sensibilité à des effets d'environnement (variations de température).

Enfin, les très faibles pertes par coupleur, de l'ordre de 0,1dB permettent d'envisager un système utilisant des coupleurs en cascade en grand nombre (plusieurs dizaines voir une centaine) et permettant ainsi de concevoir un système ayant un très grand nombre de canaux multiplexés en longueur d'onde.

Bien sur, l'invention n'est pas limitée aux exemples décrits ci-dessus réalisés à partir de fibres optiques. Il est facilement envisageable de réaliser l'invention utilisant toute autre structure guidante, par exemple celles utilisées pour la réalisation des circuits intégrés optoélectroniques sur substrat semiconducteur en composés III-V (AsGa / AlGaAs / GaAsInP / InP...). L'invention peut également s'appliquer à des circuits optiques réalisés sur des substrats de verre ou de silice.

Les techniques de réalisation de coupleurs optiques sont également connues pour de telles structures guidantes, et il suffit de réaliser un réseau de Bragg à l'intérieur même de la région de couplage afin de réaliser une autre variante de l'invention.

D'autres variantes seront aussi facilement imaginées par l'homme de l'art, sans sortir pour autant du cadre de l'invention décrite ci-dessus et définie par l'étendue des revendications qui suivent.

**Revendications**

1. Coupleur optique sélectif en longueur d'onde, comprenant des moyens de couplage (C) pour l'extraction ou l'insertion de l'énergie optique à partir d'une ou vers une structure guidante, ces moyens C aptes à effectuer un couplage optique uniquement à une longueur d'onde donnée λB à l'exclusion de toute autre longueur d'onde, lesdits moyens de couplage comprenant un coupleur optique ayant une région de couplage, et un réseau de Bragg B apte à réfléchir ladite longueur d'onde λB, afin de permettre l'extraction ou l'insertion de ladite énergie optique à ladite longueur d'onde λB ; caractérisé en ce que ledit réseau de Bragg B est réalisé au milieu de ladite région de couplage dudit coupleur optique C sans apport de matériau.

2. Coupleur sélectif selon la revendication 1, caractérisé en ce que ledit coupleur optique (C) est un coupleur 100%.

**3.** Coupleur sélectif selon l'une quelconque des revendications précédentes, caractérisé en ce que ledit coupleur optique (C) est réalisé à partir de fibres optiques.

**4.** Coupleur sélectif selon l'une quelconque des revendications 1 ou 2, caractérisé en ce que ledit coupleur optique (C) est réalisé par les techniques de l'optoélectronique intégrée sur substrat semiconducteur.

**5.** Coupleur sélectif selon l'une quelconque des revendications 1 ou 2, caractérisé en ce que ledit coupleur optique (C) est réalisé par les techniques de l'optoélectronique intégrée sur substrat en verre.

**6.** Coupleur sélectif selon l'une quelconque des revendications 1 ou 2, caractérisé en ce que ledit coupleur optique (C) est réalisé par les techniques de l'optoélectronique intégrée avec couche guidante de silice.

**7.** Coupleur sélectif selon l'une quelconque des revendications précédentes caractérisé en ce que ledit réseau de Bragg (B) est un réseau à pas constant.

**8.** Coupleur sélectif selon l'une quelconque des revendications 1 à 6, caractérisé en ce que ledit réseau de Bragg (B) est un réseau à pas variable.

**9.** Coupleur sélectif selon l'une quelconque des revendications 1 à 6, caractérisé en ce que ledit réseau de Bragg (B) est un réseau à pas multiple.

**10.** Procédé de réalisation d'un coupleur optique sélectif en longueur d'onde, comprenant au moins les étapes suivantes :

- réalisation d'un coupleur optique (C) entre deux structures guidantes par la création d'une région de couplage entre lesdites structures,
- réalisation d'un réseau de Bragg (B) au milieu de ladite région de couplage.

FIG.1

Σλ
λa
1
2
C1
3dB
3
4
π/2
λa
B1
λa
B2
5
6
C2
3dB
7
8
π/2
Σλ−λa

FIG.2

Σλ
λB
1
2
C
B
3
4
Σλ-λB

FIG.3

Σλ-λB
1
2
C
B
3
4
λB
Σλ

Office européen des brevets

# RAPPORT DE RECHERCHE EUROPEENNE

Numero de la demande
EP 95 40 2261

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | PATENT ABSTRACTS OF JAPAN vol. 5 no. 32 (P-50) [704] ,27 Février 1981 & JP-A-55 155303 (RICOH) * abrégé * | 1,3 | G02B6/293 G02B6/12 |
| Y | EP-A-0 404 587 (FUJIKURA) * figures 7,8,16,20,22 * * revendications * | 1,10 | |
| A | * idem * | 3 | |
| Y | US-A-4 566 889 (D.C.SCHMADEL) * figures 3,4 * * colonne 5, ligne 37 - ligne 68 * * colonne 6 - colonne 7 * * colonne 8, ligne 1 - ligne 24 * | 1,10 | |
| X,P | DE-A-43 35 428 (UNIV DRESDEN TECH) 18 Mai 1995 * le document en entier * | 1,3,7,10 | |
| | | | **DOMAINES TECHNIQUES RECHERCHES (Int.Cl.6)** |
| A | US-A-4 874 216 (K.UTAKA ET.AL.) * le document en entier * | 1,4,7 | G02B |
| A | US-A-5 142 660 (CH.L.CHANG ET.AL.) * colonne 3, ligne 1 - ligne 68 * * colonne 4, ligne 1 - ligne 23 * | 1,5,7 | |
| A | US-A-5 048 909 (CH.H.HENRY ET.AL.) * le document en entier * | 1,7-9 | |
| A | PATENT ABSTRACTS OF JAPAN vol. 8 no. 286 (P-324) ,27 Décembre 1984 & JP-A-59 149304 (NIPPON DENSHIN DENWA) * abrégé * | 1,7 | |

-/--

Le présent rapport a été établi pour toutes les revendications

| Lieu de la recherche | Date d'achèvement de la recherche | Examinateur |
|---|---|---|
| LA HAYE | 20 Décembre 1995 | Mathyssek, K |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Office européen des brevets

# RAPPORT DE RECHERCHE EUROPEENNE

Numero de la demande
EP 95 40 2261

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | PATENT ABSTRACTS OF JAPAN<br>vol. 6 no. 209 (P-150) ,21 Octobre 1982<br>& JP-A-57 114111 (NIPPON DENSHIN DENWA)<br>* abrégé *<br>----- | 1,6 | |

DOMAINES TECHNIQUES RECHERCHES (Int.Cl.6)

Le présent rapport a été établi pour toutes les revendications

| Lieu de la recherche | Date d'achèvement de la recherche | Examinateur |
|---|---|---|
| LA HAYE | 20 Décembre 1995 | Mathyssek, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)